# EUROPÄISCHE PATENTSCHRIFT

(11) **EP 3 631 593 B1**
(45) Veröffentlichungstag und Bekanntmachung des Hinweises auf die Patenterteilung: **14.04.2021**
(21) Anmeldenummer: 18746603.2
(22) Anmeldetag: 09.07.2018
(51) Int. Cl.: G05B 23/02, G01D 3/08, G01D 18/00, G01D 21/00, H04Q 9/00

(54) **ÜBERWACHUNGSVORRICHTUNG UND VERFAHREN ZUR ÜBERWACHUNG EINES SYSTEMS**
MONITORING DEVICE AND METHOD FOR MONITORING A SYSTEM
DISPOSITIF DE SURVEILLANCE ET PROCÉDÉ DE SURVEILLANCE D'UN SYSTÈME

(30) Priorität: 10.07.2017 DE 102017211737
(43) Veröffentlichungstag der Anmeldung: 08.04.2020
(73) Patentinhaber: Siemens Aktiengesellschaft, 80333 München (DE)
(72) Erfinder: HUBAUER, Thomas, 85748 Garching bei München (DE); RINGSQUANDL, Martin, 83022 Rosenheim (DE)
(86) Internationale Anmeldenummer: PCT/EP2018/068578
(87) Internationale Veröffentlichungsnummer: WO 2019/011877

(56) Entgegenhaltungen:
- EP-A1- 2 182 327
- DE-A1-102014 208 034
- US-A1- 2005 065 744

## Beschreibung

Die vorliegende Erfindung betrifft eine Überwachungsvorrichtung und ein Verfahren zur Überwachung eines Systems. Insbesondere betrifft die Erfindung eine Überwachungsvorrichtung zur Auswertung von Sensordaten.

Moderne technische Systeme sind mit einer Vielzahl von Sensoren ausgestattet. Diese Sensoren erfassen in der Regel alle relevanten Systemzustände. Basierend auf den Ausgangssignalen der Sensoren kann der aktuelle Zustand des zu überwachenden Systems ermittelt werden. Somit ist eine angepasste Steuerung oder Regelung des Systems mittels der Ausgabewerte der Sensoren möglich. Insbesondere können aus den Ausgabewerten der Sensoren auch kritische Systemzustände abgeleitet werden. Ein solcher kritischer Systemzustand kann beispielsweise einen Eingriff in den Ablauf des Systems oder gegebenenfalls auch eine ganz oder teilweise Abschaltung des Systems erforderlich machen.

Für einen sicheren Betrieb eines solchen Systems ist es dabei erforderlich, dass die von den Sensoren bereitgestellten Daten möglichst vollständig und mit hoher Zuverlässigkeit vorliegen. Bei fehlerhaften oder gegebenenfalls fehlenden Sensordaten kann eventuell die Zuverlässigkeit der Steuerung oder die Detektion von kritischen Betriebszuständen nicht mit ausreichender Zuverlässigkeit gewährleistet werden.

Aufgrund der hohen Anzahl von Sensoren in einem System ist es dabei unter Umständen möglich, beim Ausfall eines Sensors die Daten dieses Sensors aus den Daten weiterer Sensoren des Systems abzuleiten. Hierzu existieren verschiedene Ansätze.

Beispielsweise können in einem statistik-basierten Ansatz Zusammenhänge zwischen den einzelnen Sensordaten identifiziert werden. Hierzu kann zum Beispiel jeweils paarweise für die Daten von zwei Sensoren eine statistische Beziehung, wie zum Beispiel eine Korrelation, berechnet werden. Ergibt sich dabei für zwei Sensoren eine hohe Korrelation, so besteht zwischen den Sensordaten der beiden Sensoren eine starke Beziehung, so dass beim Ausfall eines der beiden Sensoren die Daten des anderen Sensors jeweils von dem noch funktionierenden Sensor abgeleitet werden können. Nachteilig für diesen Ansatz ist dabei, dass vorab für jede Paarung von Sensoren individuell ein statistischer Wert berechnet werden muss. Aufgrund der hohen Anzahl von Sensoren in einem System ist hierfür eine große Rechenleistung mit einer entsprechend aufwändigen und teuren Hardware erforderlich.

Alternativ können miteinander in Beziehung stehende Sensordaten auch mittels eines wissensbasierten Ansatzes identifiziert werden. Hierzu ist jedoch eine sehr detaillierte Kenntnis des zu überwachenden Systems erforderlich. Diese Kenntnis wird in der Regel aus menschlichem Wissen gewonnen. Daher ist es für jedes neu zu konzipierende System erneut erforderlich, eine geeignete Wissensbasis zu erstellen. Dies erfordert eine sehr detaillierte Analyse des Systems und ein hohes Maß an menschlichem Zutun. Solche Konzepte sind daher ebenfalls sehr aufwändig und aufgrund des menschlichen Faktors auch fehleranfällig.

Aus der EP 2 182 327 A1 ist eine Überwachungsvorrichtung bekannt. Diese verfügt über eine Empfangseinrichtung, die dazu ausgelegt ist, Sensordaten von mehreren Sensoren zu empfangen. Die Überwachungsvorrichtung verfügt ferner über eine Auswerteeinrichtung, die dazu ausgelegt ist, einen Fehler in einem ersten Sensor der mehreren Sensoren zu detektieren und virtuelle Sensordaten zu berechnen, die die Sensordaten des fehlerhaften ersten Sensors ersetzen.

Es besteht daher ein Bedarf zur Überwachung eines Systems mit mehrerer Sensoren, bei welchem beim Auftreten eines Fehlers in einem der Sensoren besonders zuverlässig und schnell die Daten des ausgefallenen Sensors aus den noch zur Verfügung stehenden Sensordaten rekonstruiert werden können.

Hierzu schafft die vorliegende Erfindung eine Überwachungsvorrichtung mit den Merkmalen des Patentanspruchs 1, eine Vorrichtung zur Überwachung eines Systems mit den Merkmalen des Patentanspruchs 7 und ein Verfahren zur Überwachung eines Systems mit den Merkmalen des Patentanspruchs 8.

### Demgemäß ist vorgesehen:

Eine Überwachungsvorrichtung mit einer Empfangseinrichtung und einer Auswerteeinrichtung. Die Empfangseinrichtung ist dazu ausgelegt, Sensordaten von mehreren Sensoren zu empfangen. Die Auswerteeinrichtung ist dazu ausgelegt, einen Fehler in einem ersten Sensor der mehreren Sensoren zu detektieren. Ferner ist die Auswerteeinrichtung dazu ausgelegt, virtuelle Sensordaten zu berechnen, die die Sensordaten des fehlerhaften ersten Sensors ersetzen. Die Auswerteeinrichtung ermittelt dabei für die Berechnung der virtuellen Sensordaten zunächst eine Liste von Sensorkandidaten aus den mehreren Sensoren. Für jeden Sensor der Sensorkandidaten bestimmt die Auswerteeinrichtung jeweils einen Ähnlichkeitswert. Daraufhin berechnet die Auswerteeinrichtung virtuelle Sensordaten für den fehlerhaften ersten Sensor unter Verwendung der Sensordaten des Sensors mit dem größten Ähnlichkeitswert.

### Weiterhin ist vorgesehen:

Eine Vorrichtung zur Überwachung eines Systems mit mehreren Sensoren, einer erfindungsgemäßen Überwachungsvorrichtung und einer Steuereinrichtung. Die mehreren Sensoren sind jeweils dazu ausgelegt, Sensordaten bereitzustellen. Die bereitgestellten Sensordaten eines Sensors korrespondieren dabei jeweils zu einem erfassten Messwert in dem System. Die Steuereinrichtung ist dazu ausgelegt, das System unter Verwendung der empfangenen Sensordaten und der berechneten virtuellen Sensordaten zu steuern.

### Ferner ist vorgesehen:

Ein Verfahren zur Überwachung eines Systems. Das System umfasst die Schritte des Empfangens von Sensordaten von mehreren Sensoren und des Detektierens eines Fehlers in einem ersten Sensor der mehreren Sensoren. Weiterhin umfasst das Verfahren einen Schritt zum Ermitteln einer Liste von Sensorkandidaten aus den mehreren Sensoren und einen Schritt zum Bestimmen eines Ähnlichkeitswerts für jeden Sensor in der Liste der Sensorkandidaten. Schließlich umfasst das Verfahren einen Schritt zum Berechnen virtueller Sensordaten. Die virtuellen Sensordaten ersetzen dabei die Sensordaten des fehlerhaften ersten Sensors. Hierbei werden die virtuellen Sensordaten unter Verwendung der Sensordaten des Sensors mit dem größten Ähnlichkeitswert berechnet.

Der vorliegenden Erfindung liegt die Erkenntnis zugrunde, dass bei einem System mit einer Vielzahl von Sensoren beim Ausfall eines Sensors die Sensordaten zumeist aus den weiteren Sensordaten rekonstruiert werden können. Dabei ist jedoch die Identifizierung geeigneter alternativer Sensoren, aus denen sich fehlende bzw. fehlerhafte Sensordaten rekonstruieren lassen, mit einem sehr großen Aufwand verbunden. Dieser hohe Aufwand erschwert und verteuert somit die Konzeption eines zuverlässigen Systems.

Der vorliegenden Erfindung liegt daher die Idee zugrunde, dieser Erkenntnis Rechnung zu tragen und eine Überwachung eines Systems vorzusehen, bei welchem auf eine möglichst einfache und dennoch zuverlässige Weise alternative Sensordaten zur Rekonstruktion von fehlenden bzw. fehlerhaften Daten identifiziert werden kann. Hierzu sieht die vorliegende Erfindung einen zweistufigen Ansatz vor. In einem ersten Schritt kann ein vorhandenes System zunächst strukturell und funktional analysiert werden. Auf diese Weise können in einem relativ einfachen Verfahren funktionale und strukturelle Zusammenhänge identifiziert werden, welche als Ausgangsbasis für alternative Sensorquellen dienen können. Hierdurch kann die Anzahl möglicher Kandidaten von Sensoren, die als Ausgangsbasis für die Rekonstruktion von Sensordaten dienen, bereits stark eingeschränkt werden. Daraufhin können in einem weiteren Schritt durch eine statistische/mathematische Analyse die Zusammenhänge der Sensordaten der einzelnen Kandidaten berechnet werden. Werden dabei starke Zusammenhänge zwischen den Daten zweier Sensoren identifiziert, so kann beim Ausfall eines der Sensoren der jeweils andere Sensor als Basis für die Rekonstruktion der fehlerhaften Sensordaten herangezogen werden.

Das Ermitteln von Kandidaten von Sensoren, aus deren Daten beim Ausfall eines Sensors die Sensordaten des fehlerhaften Sensors rekonstruiert werden können, kann auf einer beliebigen geeignete Analyse des Systems basieren. Beispielsweise kann eine strukturelle und/oder funktionale Beschreibung des Systems in einer Datenbank oder einem anderen geeigneten Speicher abgelegt werden. Basierend auf dieser strukturellen bzw. funktionalen Beschreibung des Systems können funktionale, strukturelle sowie räumliche Zusammenhänge zwischen den einzelnen Sensoren in dem System identifiziert werden. Wird beispielsweise ein Volumenstrom überwacht, so können alle Sensoren, welche an dieser Überwachung des Volumenstroms beteiligt sind, in einen Zusammenhang gesetzt werden. Andererseits können andere Sensoren, welche nicht an der Überwachung eines solchen Volumenstroms beteiligt sind, vernachlässigt werden, so dass die Anzahl der Sensoren für den nachfolgenden zweiten Schritt verringert werden kann. Ferner können auch bereits vorhandene Kenntnisse von ähnlichen, früher konzipierten Systemen mit in die Erstellung der Liste von möglichen Sensorkandidaten einbezogen werden. Grundsätzlich ist es darüber hinaus auch möglich, dass auch weitere Wissensquellen zur Erstellung der Sensorkandidatenliste herangezogen werden.

Das Erstellen der Liste der Sensorkandidaten kann bereits bei der Konzeption des Systems erfolgen. Darüber hinaus kann die Liste der Sensorkandidaten auch während des normalen operationellen Betriebs aufgebaut, erstellt oder gegebenenfalls in Abhängigkeit von einem Betriebszustand oder Modifikationen an dem System auch angepasst werden. Da die Erstellung der Liste von Sensorkandidaten unabhängig vom laufenden Betrieb des Systems ist, ist für die Erstellung der Liste der Sensorkandidaten nur eine geringe Rechenleistung erforderlich. Insbesondere handelt es sich bei der Erstellung der Liste der Sensorkandidaten um keinen zeitkritischen Prozess, da keine hohe Rechenleistung für Echtzeitanwendungen erforderlich ist.

Im weiteren Verlauf können daraufhin für die potentiellen Kandidaten, aus denen sich im Fehlerfall die Daten eines fehlerhaften Sensors rekonstruieren lassen könnten, jeweils ein Ähnlichkeitswert ermittelt werden. Beispielsweise kann hierzu eine Funktion definiert werden, welche ein Maß für eine Ähnlichkeit zwischen den Daten von zwei Sensoren beschreibt. Insbesondere kann zum Beispiel eine Korrelation bzw. Kreuzkorrelation zwischen den Daten von zwei Sensoren berechnet werden. Je höher die Ähnlichkeit, insbesondere die Korrelation zwischen den Daten zweier Sensoren ist, desto stärker stehen die Daten der beiden Sensoren miteinander in Beziehung. Beim Ausfall der Daten eines der beiden Sensoren können dabei bei einer hohen Ähnlichkeit, insbesondere einer starken Korrelation, relativ gut aus den Daten des noch funktionierenden Sensors die Daten des fehlerhaften Sensors rekonstruiert werden.

Bei dem zu überwachenden System kann es sich um ein beliebiges System, insbesondere um ein beliebiges technisches System handeln. So sind zum Beispiel als System technische Anlagen möglich, welche aus einem oder mehreren Ausgangsstoffen oder Produkten ein Endprodukt herstellen. Beispielsweise kann es sich hierbei um eine Prozessanlage eines chemischen Prozesses handeln. Darüber hinaus sind auch beliebige Produktionsanlagen zur ganz oder teilweise automatischen Fertigung von Produkten als System möglich. Ein solches System kann beispielsweise eine Fertigungsanlage für ein Haushaltsgerät, oder eine beliebige andere Produktionsanlage umfassen. Ferner kann es sich bei dem System auch beispielsweise um ein Kraftwerk wie zum Beispiel ein Gas- oder Kohlekraftwerk handeln. Darüber hinaus kann das zu überwachende System gegebenenfalls auch nur ein Teil einer solchen Produktionsanlage oder eines Kraftwerks sein. Beispielsweise kann es sich bei dem zu überwachenden System auch nur um eine Turbine eines Kraftwerks handeln. Darüber hinaus sind jedoch auch beliebige weitere Systeme möglich, welche mit mehreren Systemen überwacht und gesteuert werden können.

Die Detektion des Fehlers in dem ersten Sensor kann auf beliebige Weise erfolgen. Beispielsweise können die empfangenen Sensordaten auf Konsistenz überprüft werden. Liegen die empfangenen Sensordaten oberhalb und/oder unterhalb vorgegebener Grenzwerte, so kann dies beispielsweise Anzeichen auf einen fehlerhaften Sensor sein. Darüber hinaus können die empfangenen Sensordaten auch mit bereits zuvor empfangenen Sensordaten verglichen werden und bei einer zu starken Abweichung auf einen möglichen Fehler geschlossen werden. In einem einfachen Fall kann bereits aus dem Fehlen von bereitgestellten Sensordaten auf eine Fehlfunktion des Sensors geschlossen werden. Darüber ist es jedoch auch möglich, ein zusätzliches Signal zu empfangen, welches einen möglichen Fehler in einem der Sensoren anzeigt. Der Begriff "erster Sensor" dient dabei lediglich dazu, diesen Sensor von den weiteren Sensoren zu unterscheiden. Ein erster Sensor kann dabei ein beliebiger Sensor des Systems aus den mehreren Sensoren des Systems sein.

Gemäß einer Ausführungsform umfasst die Überwachungseinrichtung eine Speichereinrichtung. Die Auswerteeinrichtung kann hierbei dazu ausgelegt sein, die empfangenen Sensordaten von den mehreren Sensoren in der Speichereinrichtung abzuspeichern. Ferner kann die Auswerteeinrichtung die Ähnlichkeitswerte unter Verwendung der abgespeicherten Sensordaten berechnen, die vor der Detektion eines Fehlers in dem ersten Sensor abgespeichert worden sind. Insbesondere können für die Berechnung der Ähnlichkeitswerte die abgespeicherten Sensordaten eines vorbestimmten Zeitfensters oder Zeitintervalls für die Berechnung der Ähnlichkeitswerte verwendet werden.

Gemäß einer Ausführungsform umfasst die Überwachungseinrichtung eine Datenbank. Die Datenbank kann dazu ausgelegt sein, Informationen über die mehreren Sensoren zu speichern und bereitzustellen. Die Auswerteeinrichtung kann die Liste für die Sensorkandidaten unter Verwendung der durch die Datenbank bereitgestellten Informationen über die mehreren Sensoren erstellen. Beispielsweise können in der Datenbank Informationen über funktionale Zusammenhänge der einzelnen Sensoren abgespeichert werden. Darüber hinaus können auch räumliche und/oder strukturelle Zusammenhänge zwischen den einzelnen Sensoren in der Datenbank abgespeichert werden. Ferner können auch beliebige weitere zusätzliche Angaben über das System und insbesondere über die einzelnen Sensoren in dem System in der Datenbank abgespeichert werden. Diese Informationen können beispielsweise automatisch oder gegebenenfalls auch ganz oder teilweise manuell in die Datenbank eingepflegt werden. Auf diese Weise kann eine Wissensbasis über das System und die darin enthaltenen Sensoren bereitgestellt werden. Insbesondere kann in der Datenbank auch für jeden Sensor beispielsweise ein Gütemaß im Zusammenhang mit dem jeweiligen Sensor abgespeichert werden. Dieses Gütemaß kann beispielsweise eine Angabe über die Toleranzbreite der Sensordaten oder einen beliebigen anderen Parameter für die Qualität der Sensordaten spezifizieren. Hieraus lassen sich insbesondere bei der Rekonstruktion von virtuellen Sensordaten für einen fehlerhaften Sensor auch Angaben über die Zuverlässigkeit und/oder Toleranz der generierten virtuellen Sensordaten ableiten.

Gemäß einer Ausführungsform ermittelt die Auswerteeinrichtung die Sensorkandidaten unter Verwendung von räumlichen, strukturellen oder funktionalen Zusammenhängen der einzelnen Sensoren in dem System. Auf diese Weise kann die Anzahl von potentiellen Sensorkandidaten in einem System mit zahlreichen Sensoren durch Auswertung der bekannten Zusammenhänge der Sensoren bereits stark eingeschränkt werden.

Gemäß einer Ausführungsform generiert die Auswerteeinrichtung eine Rechenvorschrift für das Berechnen der virtuellen Sensordaten aus den Sensordaten des oder der Sensoren, aus denen die virtuellen Sensordaten abgeleitet werden können. Auf diese Weise können die virtuellen Sensordaten im Fehlerfall sehr schnell aus den noch zur Verfügung stehenden Sensordaten berechnet werden.

Gemäß einer Ausführungsform umfasst das Berechnen der virtuellen Sensordaten das Berechnen eines Zuverlässigkeitswerts für die berechneten virtuellen Sensordaten. Insbesondere kann der Zuverlässigkeitswert beispielsweise unter Verwendung des berechneten Ähnlichkeitswertes und/oder einer im Zusammenhang mit den Sensoren definierten Güte der Sensordaten berechnet werden. Auf diese Weise kann ein Maß für die Qualität der virtuellen Sensordaten berechnet werden. Entsprechend kann die weitere Steuerung und Überwachung des Systems mittels der virtuellen Sensordaten gemäß dem berechneten Zuverlässigkeitswert angepasst werden.

Gemäß einer Ausführungsform des Verfahrens zur Überwachung eines Systems umfasst das Berechnen des Ähnlichkeitswertes zwischen zwei Sensoren die Berechnung einer Korrelation zwischen den beiden Sensoren, insbesondere zwischen dem als fehlerhaft identifizierten ersten Sensor und einem Kandidaten der weiteren Sensoren. Darüber hinaus sind auch beliebige weitere Funktionen und Rechenvorschriften zur Definition von Größen möglich, welchen einen Zusammenhang zwischen den Daten zweier Sensoren beschreiben.

Gemäß einer Ausführungsform wird das Ermitteln der Liste von Sensorkandidaten bereits vor dem Detektieren eines Fehlers in dem ersten Sensor ausgeführt. Auf diese Weise steht die Liste von Sensorkandidaten bei der Detektion eines Fehlers bereits zur Verfügung, so dass anschließend sehr schnell ein geeigneter Sensor identifiziert werden kann, auf dessen Basis die alternativen virtuellen Sensordaten für den fehlerhaften Sensor berechnet werden können. Die Liste der Sensorkandidaten kann dabei beispielsweise nur einmalig bei der Konzeption des Systems erstellt werden. Darüber hinaus ist es auch möglich, die Liste der Sensorkandidaten bei einer Modifikation des Systems und/oder in Abhängigkeit eines Betriebszustandes des Systems anzupassen.

Gemäß einer Ausführungsform umfasst das Verfahren einen Schritt zum Speichern der empfangenen Sensordaten der mehreren Sensoren. Das Bestimmen des Ähnlichkeitswerts kann in diesem Fall unter Verwendung der gespeicherten Sensorwerte erfolgen, welche empfangen worden sind, bevor ein Fehler in dem ersten Sensor detektiert worden ist. Auf diese Weise stehen für die Berechnung der Ähnlichkeitswerte geeignete fehlerfreie Sensordaten zur Verfügung. Insbesondere kann die Berechnung der Ähnlichkeitswerte zwischen zwei Sensoren basierend auf Sensordaten erfolgen, welche innerhalb eines vorbestimmten Zeitintervalls oder Zeitfensters empfangen worden sind.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der vorliegenden Erfindung hinzufügen.

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines zu überwachenden Systems gemäß einer Ausführungsform;
- Figur 2:: eine schematische Darstellung eine Überwachungsvorrichtung in einer Vorrichtung zur Überwachung eines Systems gemäß einer Ausführungsform; und
- Figur 3:: eine schematische Darstellung eines Ablaufdiagramms, wie es einem Verfahren zur Überwachung eines Systems gemäß einer Ausführungsform zugrunde liegt.

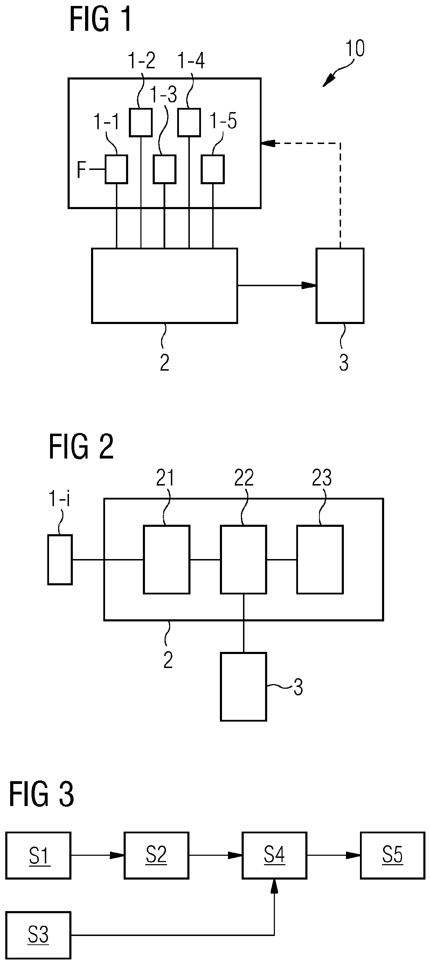

Figur 1 zeigt eine schematische Darstellung eines zu überwachenden Systems 10. Bei dem zu überwachenden System 10 kann es sich um ein beliebiges zu überwachendes System handeln. Beispielsweise kann es sich bei dem System 10 um eine Produktionsanlage, eine Fertigungsstraße, ein Kraftwerk oder auch nur einen Teil davon handeln. Beispielsweise kann es sich bei dem System 10 auch um eine Turbine oder einen anderen zu überwachenden Teil eines Kraftwerks handeln. Ebenso kann beispielsweise als System 10 auch ein Teil einer Produktionsanlage, wie zum Beispiel ein Reaktionsbehälter oder dergleichen überwacht werden. In dem System 10 sind mehrere Sensoren 1-i vorgesehen. Jeder dieser Sensoren 1-i kann beispielsweise einen oder mehrere Parameter des Systems 10 überwachen und Sensordaten bereitstellen, welche zu dem oder den überwachten Parametern korrespondieren. Beispielsweise können die Sensoren 1-i jeweils eine Temperatur, einen Druck, einen Volumenstrom, eine Feuchtigkeit, eine Konzentration einer vorbestimmten Substanz in einem Volumen, eine Füllmenge, eine Länge, wie zum Beispiel einen Abstand oder eine Ausdehnung, eine Intensität, wie zum Beispiel eine Licht- oder Strahlungsintensität, eine elektrische Größe, wie zum Beispiel eine Spannung, einen Strom, eine Leistung, etc., oder eine beliebige andere physikalische Größe erfassen. Die Sensordaten, welche von den Sensoren 1-i bereitgestellt werden, können beispielsweise als analoge oder digitale Werte bereitgestellt werden. Insbesondere können beispielsweise die Sensordaten als digitale Daten bereitgestellt werden. Dabei können die Daten für jeden Sensor separat über eine geeignete Verbindung an einer Überwachungsvorrichtung 2 bereitgestellt werden. Ebenso ist es möglich, dass die Daten mehrerer Sensoren über einen gemeinsamen Datenbus an der Überwachungsvorrichtung 2 bereitgestellt werden. Hierzu ist ein beliebiges, geeignetes Bussystem möglich.

Die Überwachungsvorrichtung 2 empfängt die Sensordaten von den Sensoren 1-i. Falls in einem Sensor F ein Fehler auftreten sollte und somit von diesem Sensor F keine oder nur fehlerhafte Sensordaten bereitgestellt werden können, so rekonstruiert die Überwachungsvorrichtung 1 die Sensordaten dieses fehlerhaften Sensors F und stellt für diesen fehlerhaften Sensor F virtuelle Sensordaten bereit. Daraufhin kann die Steuereinrichtung 3 des Systems 10 das System unter Verwendung der Sensordaten von den Sensoren 1-i und gegebenenfalls unter Verwendung der virtuellen Sensordaten für den fehlerhaften Sensor F steuern oder regeln. Insbesondere kann die Steuervorrichtung 3 dabei auch gegebenenfalls kritische Betriebszustände des Systems 10 anhand der Sensordaten von den Sensoren 1-i und gegebenenfalls den virtuellen Sensordaten identifizieren. Falls ein solcher kritischer Betriebszustand in dem System 10 basierend auf den Sensordaten 1-i und gegebenenfalls den virtuellen Sensordaten identifiziert worden ist, so kann daraufhin beispielsweise eine geeignete Signalisierung erfolgen. Die Signalisierung kann als optisches und/oder akustisches Signal ausgegeben werden. Ebenso ist es auch möglich, ein analoges oder digitales Signal auszugeben, basierend auf dem die Steuerung des Systems 10 angepasst werden kann oder gegebenenfalls auch das System 10 beim Auftreten eines kritischen Betriebszustandes ganz oder teilweise angehalten werden kann.

Für einen sicheren Betriebsablauf ist es dabei von großer Bedeutung, dass gerade solche kritischen Betriebszustände zuverlässig erkannt werden. Wird beispielsweise beim Eintreten eines kritischen Betriebszustandes der Ablauf des Systems 10 nicht rechtzeitig angepasst, so kann dies zu einer erheblichen Gefahrensituation in dem System 10 führen. Wird andererseits, beispielsweise aufgrund unzureichender Sensordaten, ein kritischer Betriebszustand des Systems 10 ermittelt, obwohl ein solcher kritischer Betriebszustand des Systems 10 nicht vorliegt, so kann dies zu einem ganz oder teilweisen Ausfall des Systems 10 führen, welcher beispielsweise mit erheblichen Kosten aufgrund eines Stillstands des Systems 10 verbunden sein kann. Daher ist es von großer Bedeutung, stets eine ausreichende Datenbasis auf Grundlage der Sensordaten von den Sensoren 1-i zur Verfügung zu haben.

Die Überwachungsvorrichtung 2 des Systems 10 kann daher beim Auftreten eines Fehlers in einem Sensor F virtuelle Sensordaten rekonstruieren, welche anstelle der tatsächlichen Sensordaten des fehlerhaften Sensors F verwendet werden können. Diese virtuellen Sensordaten können dabei aus den Sensordaten eines oder gegebenenfalls auch mehrerer weiterer Sensoren 1-i des Systems 10 berechnet werden. Die Funktion der Überwachungsvorrichtung 2 wird im Nachfolgenden näher erläutert.

Figur 2 zeigt eine schematische Darstellung einer Überwachungsvorrichtung 2, wie sie in einem System 10 eingesetzt werden kann. Die Überwachungsvorrichtung 2 umfasst zumindest eine Empfangseinrichtung 21 und eine Auswerteeinrichtung 22. Ferner kann die Überwachungsvorrichtung 2 auch eine Datenbank 23 und gegebenenfalls weitere Komponenten umfassen. Die Empfangseinrichtung 21 empfängt die Sensordaten der Sensoren 1-i des Systems 10. Die empfangenen Sensordaten werden daraufhin an der Auswerteeinrichtung 22 bereitgestellt. Die Auswerteeinrichtung 22 kann beispielsweise einen Fehler in den Sensordaten eines Sensors F detektieren. Beispielsweise kann die Auswerteeinrichtung 22 die empfangenen Sensordaten mit einem oberen und/oder unteren Schwellwert vergleichen. Über- bzw. unterschreiten die Sensordaten den bzw. die vorgegebenen Schwellwerte, so kann dies auf eine Fehlfunktion des entsprechenden Sensors 1-i hinweisen. Ferner kann auch der zeitliche Verlauf der Werte der Sensordaten ausgewertet werden, um bei einer Abweichung des zeitlichen Verlaufs von vorgegebenen Kriterien auf eine Fehlfunktion des entsprechenden Sensors 1-i zu schließen. Alternativ ist es auch möglich, dass die Auswerteeinrichtung 22 ein zusätzliches Signal empfängt, welches eine Fehlfunktion des entsprechenden Sensors 1-i signalisiert. Bei diesem Signal kann es sich um ein beliebiges analoges oder digitales Signal handeln, welches dazu geeignet ist, eine Fehlfunktion des entsprechenden Sensors 1-i anzuzeigen.

Stellt die Auswerteeinrichtung 22 fest, dass eine Fehlfunktion eines Sensors F vorliegt, so berechnet die Auswerteeinrichtung 22 aus den Sensordaten eines oder mehrerer weiterer Sensoren 1-i virtuelle Sensordaten für den fehlerhaften Sensor F. Diese virtuellen Sensordaten können für die weitere Verarbeitung anstelle der tatsächlichen Sensordaten des fehlerhaften Sensors F verwendet werden. Entsprechend kann die Steuerung des Systems 10 und insbesondere die Detektion von gegebenenfalls kritischen Betriebszuständen des Systems 10 auf Grundlage der Sensordaten und der berechneten virtuellen Sensordaten erfolgen.

Für die Berechnung der virtuellen Sensordaten bestimmt die Auswerteeinrichtung 22 zunächst, auf Grundlage welcher Sensordaten von weiteren Sensoren 1-i des Systems 10 eine möglichst genaue und zuverlässige Berechnung virtueller Sensordaten für den fehlerhaften Sensor 1-i möglich ist. Hierzu wird in einem ersten Schritt zunächst eine Liste von möglichen Kandidaten von Sensoren ermittelt. In einem weiteren Schritt wird für diese ermittelten Kandidaten von Sensoren 1-i jeweils ein Wert bestimmt, welcher ein Maß für die Beziehung zwischen dem fehlerhaften Sensor F und dem jeweiligen Kandidaten spezifiziert. Daraufhin können die virtuellen Sensordaten aus Sensordaten von dem oder den weiteren Sensoren 1-i berechnet werden, welche einen besonders starken Zusammenhang mit den Sensordaten des fehlerhaften Sensors F aufweisen.

Die Ermittlung möglicher Kandidaten von Sensoren 1-i kann beispielsweise durch eine Analyse von Spezifikationen über das System 10 erfolgen. Diese Spezifikationen können beispielsweise in der Datenbank 23 abgespeichert und durch die Datenbank 23 bereitgestellt werden. Beispielsweise können die funktionalen Beziehungen der einzelnen Sensoren 1-i zueinander ausgewertet werden. So können zum Beispiel mehrere Sensoren 1-i, welche im Zusammenhang mit einem gemeinsamen Prozessschritt stehen, als zusammengehörig angesehen werden. Umfasst das System 10 zum Beispiel einen Reaktionsbehälter, so können alle Sensoren, welche Größen erfassen, die im Zusammenhang mit diesem Reaktionsbehälter stehen, zu einer gemeinsamen Gruppe zugehörig angesehen werden. Auch können beispielsweise die Daten von Sensoren, welche mehrere Größen eines Volumenstroms in einer Rohrleitung erfassen, als zusammengehörig angesehen werden. Darüber hinaus können auch beliebige andere Sensorgruppen für ein System 10 gebildet werden. Insbesondere ist beispielsweise möglich, die Sensoren 1-i in dem System in einer hierarchischen Struktur zu spezifizieren. In diesem Fall können beispielsweise Sensoren, welche in einer höheren hierarchischen Ebene alle zusammengehören, als eine Gruppe von Sensoren angesehen werden. Die Gruppierung der Sensoren kann dabei sowohl auf funktionalen Zusammenhängen basieren, das heißt Sensoren, welche Größen einer gemeinsamen Funktion des Systems 10 erfassen, können als Gruppe zusammengefasst werden, oder die Gruppierung der Sensoren kann beispielsweise auch auf strukturellen oder räumlichen Anordnungen in dem System 10 basieren, das heißt Sensoren, welche in einem gemeinsamen räumlichen Bereich des Systems 10 angeordnet sind, können als eine gemeinsame Gruppe angesehen werden. Darüber hinaus sind selbstverständlich auch beliebige andere geeignete Gruppierungen von Sensoren 10 möglich.

Die Gruppierung der Sensoren 1-i zur Bildung von möglichen Kandidaten von Sensoren 1-i aus deren Daten virtuelle Sensordaten für einen ausgefallenen Sensor F berechnet werden können, kann darüber hinaus auch auf beliebige andere Weise erfolgen. Beispielsweise können mögliche Kandidaten auch bereits bei der Konzeption des Systems 10 festgelegt und abgespeichert werden. Insbesondere können hierbei beliebige wissensbasierte Ansätze zur Bildung von möglichen Kandidaten von Sensoren herangezogen werden. Beispielsweise ist auch eine semantische Analyse der Spezifikation des Systems 10 zur Identifikation von möglichen Kandidaten von Sensoren 1-i möglich. Die Ermittlung der Liste von möglichen Kandidaten von Sensoren 1-i kann dabei ganz oder gegebenenfalls auch teilweise automatisch mittels beliebiger geeigneter Verfahren erfolgen. Beispielsweise können auch Algorithmen auf Basis einer Fuzzy Logic zur Identifikation von möglichen Kandidaten von Sensoren 1-i eingesetzt werden.

Die Liste von möglichen Kandidaten von Sensoren 1-i, die als Ausgangsbasis für die Berechnung von virtuellen Sensordaten für einen fehlerhaften Sensor 1-i herangezogen werden können, kann dabei einmalig bei der Konzeption des Systems 10 erfolgen. Darüber hinaus ist es auch möglich, die Liste von Kandidaten von Sensoren 1-i nach der Konzeption des Systems 10 anzupassen. Zum Beispiel kann die Liste von möglichen Kandidaten von Sensoren 1-i bei einer Modifikation des Systems 10 entsprechend der Modifikation angepasst werden. Auch eine Anpassung der Liste der möglichen Kandidaten von Sensoren 1-i in Abhängigkeit des jeweiligen Betriebszustandes des Systems 10 ist möglich.

Entscheidend hierbei ist jedoch, dass das Erstellen der Liste von möglichen Kandidaten von Sensoren 1-i für die Berechnung von virtuellen Sensordaten für einen bestimmten Sensor 1-i bereits vor dem Auftreten eines Fehlers in dem entsprechenden Sensor 1-i erfolgen kann. Daher handelt es sich bei der Ermittlung der Liste von möglichen Kandidaten von Sensoren 1-i um keinen zeitkritischen Prozess, so dass das Erstellen der Liste von möglichen Kandidaten von Sensoren 1-i mit einer relativ geringen Prozessorleistung ausgeführt werden kann. Die ermittelte Liste von Kandidaten von möglichen Sensoren kann daraufhin in einem Speicher der Auswerteeinrichtung 22 abgespeichert und bereitgehalten werden.

Bei den möglichen Kandidaten von Sensoren 1-i, aus deren Sensordaten im Fehlerfall virtuelle Sensordaten für einen Sensor F berechnet werden können, können dabei jeweils auf einen gleichen physikalischen Parameter basieren. Das heißt beispielsweise, dass für die Rekonstruktion einer Temperatur die Sensordaten von weiteren Temperatursensoren verwendet werden können. Darüber hinaus ist es jedoch auch grundsätzlich möglich, dass virtuelle Sensordaten für einen physikalischen Parameter auf Grundlage von Sensordaten für andere physikalisehe Parameter berechnet werden können. So kann beispielsweise beim Ausfall eines Temperatursensors gegebenenfalls eine Temperatur auch aus Sensordaten von Sensoren für andere physikalische Parameter wie zum Beispiel Druck, Fließgeschwindigkeit etc. abgeleitet werden.

Wird durch die Auswerteeinrichtung 22 festgestellt, dass ein Fehler in einem der Sensoren 1-i vorliegt, so ermittelt die Auswerteeinrichtung 22 daraufhin, auf Grundlage welcher Sensordaten mögliche virtuellen Sensordaten am geeignetsten berechnet werden können. Hierzu kann die Auswerteeinrichtung 22 zunächst für jeden möglichen Kandidaten eines Sensors 1-i aus der zuvor erstellten Liste von Sensorkandidaten einen Wert bestimmen, der ein Maß für den Zusammenhang zwischen dem möglichen Kandidaten eines Sensors 1-i und dem fehlerhaften Sensor F angibt. Ein solcher Wert wird im Nachfolgenden als Ähnlichkeitswert bezeichnet. Zum Beispiel kann ein solcher Ähnlichkeitswert aus einer Korrelation zwischen den Sensordaten des fehlerhaften Sensors 1-i und den Sensordaten des möglichen Kandidaten berechnet werden. Dabei bezeichnet eine hohe Korrelation mit einem Betrag nahe Eins eine hohe Übereinstimmung zwischen den Sensordaten des fehlerhaften Sensors 1-i und den Sensordaten des möglichen Kandidaten. Ein kleiner Wert nahe Null dagegen beschreibt eine sehr geringe Übereinstimmung der beiden Sensordaten.

Für die Berechnung des Ähnlichkeitswertes können dabei insbesondere Sensordaten vor der Detektion eines Fehlers in einem der Sensoren F herangezogen werden. Hierzu können beispielsweise kontinuierlich oder zu vorbestimmten Zeitpunkten jeweils Sensordaten der Sensoren 1-i abgespeichert werden. Wird ein Fehler in einem Sensor F detektiert, so können die zuvor abgespeicherten Sensordaten verwendet werden, um hieraus die Ähnlichkeitswerte zwischen den einzelnen Sensoren 1-i zu berechnen. Insbesondere kann hierbei ein Zeitfenster bzw. Zeitintervall vorgegeben werden, aus dem die Sensordaten für die Berechnung der Ähnlichkeitswerte verwendet werden. Das Zeitintervall kann je nach Anwendungsfall im Bereich vom Mikrosekunden, Millisekunden, Sekunden, Minuten, Stunden oder Tagen liegen.

Nachdem für alle möglichen Kandidaten von Sensoren 1-i ein Ähnlichkeitswert zwischen den Sensorwerten der Kandidaten und den Sensordaten des fehlerhaften Sensors F berechnet worden ist, kann mindestens ein Sensor 1-i ausgewählt werden, auf Grundlage dessen Sensordaten mögliche virtuelle Sensordaten für den fehlerhaften Sensor F berechnet werden. Hierzu können beispielsweise die Sensordaten eines noch funktionsfähigen weiteren Sensors 1-i verwendet werden, um daraus die virtuellen Sensordaten für den fehlerhaften Sensor 1-i zu berechnen. Alternativ ist es auch möglich, die Sensordaten mehrerer noch funktionsfähiger Sensoren 1-i zu verwenden, um daraus virtuelle Sensordaten für den fehlerhaften Sensor F zu berechnen.

Hierbei können aus den abgespeicherten Sensordaten vor dem Auftreten eines Fehlers in dem fehlerhaften Sensor F auch eine Beziehungen zwischen den Sensordaten des zwischenzeitlich fehlerhaften Sensors F und den Sensordaten des oder der Sensoren, auf deren Basis die virtuellen Sensordaten berechnet werden sollen, abgeleitet werden. Daraus kann eine Rechenvorschrift für das Berechnen der virtuellen Sensordaten aus den Sensordaten der funktionsfähigen Sensoren 1-i abgeleitet werden.

Ferner ist es auch möglich, den Sensoren 1-i jeweils ein Maß für eine Güte zuzuordnen. Dieses Maß für die Güte kann beispielsweise eine Genauigkeit der Sensordaten des jeweiligen Sensors 1-i beschreiben. Darüber hinaus sind auch weitere Parameter für die Spezifikation der Güte der jeweiligen Sensoren 1-i bzw. der Sensordaten von den jeweiligen Sensoren 1-i möglich. Dieses Maß für die Güte der Sensordaten kann ebenfalls mit in die Auswahl eines Sensors einbezogen werden, aus dessen Sensordaten die virtuellen Sensordaten berechnet werden sollen. So kann beispielsweise bei gleichen oder ähnlichen Ähnlichkeitswerten von zwei potentiellen Kandidaten von Sensoren 1-i der Sensor ausgewählt werden, welcher einen geeigneten Wert für die Güte der Sensordaten aufweist.

Ferner ist es auch möglich, aus den spezifizierten Werten der Güte der Sensordaten ein Maß für die Güte der virtuellen Sensordaten abzuleiten. Auf diese Weise können die virtuellen Sensordaten entsprechend klassifiziert werden. Können beispielsweise nur virtuelle Sensordaten berechnet werden, welche eine geringere Güte aufweisen, während die ursprünglichen, inzwischen jedoch fehlerhaften Sensordaten eine hohe Güte aufgewiesen haben, so kann daraufhin basierend auf der ermittelten Güte der virtuellen Sensordaten auch die Steuerung des Systems 10 angepasst werden. Insbesondere können auch die Kriterien für die Identifikation von kritischen Betriebszuständen auf Grundlage der Sensordaten angepasst werden, falls die Güte der virtuellen Sensordaten von der Güte der ursprünglichen Sensordaten abweicht. Muss zum Beispiel erwartet werden, dass die virtuellen Sensordaten nur eine Temperatur mit einer hohen Toleranz beschreiben, während der ursprüngliche Temperatursensor Sensordaten ermittelt hat, die die Temperatur mit einer hohen Genauigkeit spezifizieren, so kann gegebenenfalls ein kritischer Betriebszustand bereits bei einer entsprechend niedrigeren Temperatur festgestellt werden, um hieraus entsprechende Maßnahmen abzuleiten.

Alternativ können auch Steuer- oder Regelbereiche des Systems 10 entsprechend der Güte der virtuellen Sensordaten angepasst werden.

Figur 3 zeigt eine schematische Darstellung eines Ablaufdiagramms, wie es einem Verfahren zur Überwachung eines Systems 10 gemäß einer Ausführungsform zugrunde liegt. In Schritt S1 werden zunächst Sensordaten von mehreren Sensoren 1-i empfangen. In Schritt S2 kann ein Fehler in mindestens einem Sensor F der mehreren Sensoren 1-i detektiert werden. Die Detektion kann, wie oben bereits beschrieben, auf Grundlage der empfangenen Sensordaten oder gegebenenfalls auch einer direkten Fehlerdetektion in dem Sensor 1-i erfolgen. In Schritt S3 werden mögliche Kandidaten von Sensoren 1-i ermittelt, aus deren Sensordaten gegebenenfalls Sensordaten für den fehlerhaften Sensor F abgeleitet werden können. Das Ermitteln der möglichen Sensorkandidaten kann dabei bereits vor dem Detektieren eines Fehlers in einem Sensor 1-i, insbesondere bereits bei der Konzeption des Systems 10 oder während des normalen Betriebs des Systems 10 ermittelt werden. In Schritt S4 werden Ähnlichkeitswerte berechnet, wobei jeweils für jede Paarung zwischen dem fehlerhaften Sensor F und möglichen Kandidaten von Sensoren ein Ähnlichkeitswert berechnet wird. Die Berechnung der Ähnlichkeitswerte erfolgt dabei insbesondere auf Basis von Sensordaten vor der Detektion des Fehlers in einem Sensor F. Hierzu können, wie ebenfalls zuvor bereits beschrieben, die Sensordaten vor dem Auftreten des Fehlers abgespeichert werden.

In Schritt S5 werden virtuelle Sensordaten für den fehlerbehafteten Sensor berechnet. Diese virtuellen Sensordaten können in weiteren Prozessschritten die Sensordaten des fehlerhaften Sensors ersetzen. Die Berechnung der virtuellen Sensordaten erfolgt dabei unter Verwendung der Sensordaten mit dem größten Ähnlichkeitswert. Gegebenenfalls können auch Sensordaten von mehreren Sensoren 1-i mit einem entsprechend großen Ähnlichkeitswert für die Berechnung der virtuellen Sensordaten verwendet werden.

Anschließend kann eine Steuerung des Systems 10 basierend auf den Sensordaten erfolgen, wobei die Sensordaten des fehlerhaften Sensors durch die virtuellen Sensordaten ersetzt werden. Die Steuerung des Systems 10 kann dabei insbesondere auch eine Detektion von kritischen Betriebszuständen umfassen.

Zusammenfassend betrifft die vorliegende Erfindung das Überwachen eines technischen Systems mittels Sensordaten. Beim Ausfall eines Sensors werden dabei für den ausgefallenen Sensor virtuelle Sensordaten auf Basis der verbleibenden funktionsfähigen Sensoren erstellt. Die Auswahl der Sensoren für die Berechnung der virtuellen Sensordaten erfolgt dabei zweistufig. In einem ersten Schritt werden zunächst mögliche Kandidaten von Sensoren auf Grundlage eines wissensbasierten Ansatzes und der Topologie des Systems ermittelt. In einem zweiten Schritt wird eine mathematische Beziehung zwischen den Sensordaten eines fehlerhaften Sensors und den möglichen Kandidaten von Sensoren für die Berechnung der virtuellen Sensordaten berechnet. Auf diese Weise können diejenigen Sensoren identifiziert werden, welche eine geeignete Basis für die Berechnung der virtuellen Sensordaten bilden.

## Patentansprüche

1. Überwachungsvorrichtung (2), mit:
einer Empfangseinrichtung (21), die dazu ausgelegt ist, Sensordaten von mehreren Sensoren (1-i) zu empfangen; und
einer Auswerteeinrichtung (22), die dazu ausgelegt ist, einen Fehler in einem ersten Sensor (F) der mehreren Sensoren (1-i) zu detektieren, und virtuelle Sensordaten zu berechnen, die die Sensordaten des fehlerhaften ersten Sensors (F) ersetzen,
**dadurch gekennzeichnet, dass**
die Auswerteeinrichtung (22) für die Berechnung der virtuellen Sensordaten eine Liste von Sensorkandidaten aus den mehreren Sensoren (1-i) ermittelt, für die Sensorkandidaten jeweils einen Ähnlichkeitswert bestimmt und die virtuellen Sensordaten für den fehlerhaften ersten Sensor (F) unter Verwendung der Sensordaten des Sensors mit dem größten Ähnlichkeitswert berechnet.

2. Überwachungsvorrichtung (2) nach Anspruch 1, wobei die Auswerteeinrichtung (22) dazu ausgelegt ist, die empfangenen Sensordaten von den mehreren Sensoren (1-i) abzuspeichern, und wobei die Auswerteeinrichtung (22) die Ähnlichkeitswerte unter Verwendung von abgespeicherten Sensordaten berechnet, welche vor der Detektion eines Fehlers in dem ersten Sensor (F) abgespeichert worden sind.

3. Überwachungsvorrichtung (2) nach Anspruch 1 oder 2, wobei die Überwachungseinrichtung (2) eine Datenbank (23) umfasst, welche dazu ausgelegt ist, Informationen über die mehreren Sensoren (1-i) bereitzustellen, und wobei die Auswerteeinrichtung (22) dazu ausgelegt ist, die Liste für die Sensorkandidaten unter Verwendung der in der Datenbank (23) bereitgestellten Informationen über die mehreren Sensoren (1-i) zu erstellen.

4. Überwachungsvorrichtung (2) nach einem der Ansprüche 1 bis 3, wobei die Auswerteeinrichtung (22) dazu ausgelegt ist, die Sensorkandidaten unter Verwendung von räumlichen oder funktionalen Zusammenhängen der einzelnen Sensoren (1-i) zu ermitteln.

5. Überwachungsvorrichtung (2) nach einem der Ansprüche 1 bis 4, wobei die Auswerteeinrichtung (22) dazu ausgelegt ist, eine Rechenvorschrift für das Berechnen der virtuellen Sensordaten aus den Sensordaten des Sensors (1-i) mit dem größten Ähnlichkeitswert zu erstellen.

6. Überwachungsvorrichtung (2) nach einem der Ansprüche 1 bis 5, wobei das Berechnen der virtuellen Sensordaten das Berechnen eines Zuverlässigkeitswerts für die berechneten virtuellen Sensordaten umfasst.

7. Vorrichtung zur Überwachung eines Systems (10), mit:
mehreren Sensoren (1-i), die jeweils dazu ausgelegt sind, Sensordaten bereitzustellen, welche jeweils zu einem erfassten Messwert korrespondieren;
einer Überwachungsvorrichtung (2) nach einem der Ansprüche 1 bis 6, und
einer Steuereinrichtung (3), die dazu ausgelegt ist, das System (10) unter Verwendung der empfangenen Sensordaten und der berechneten virtuellen Sensordaten zu steuern.

8. Verfahren zu Überwachung eines Systems (10), mit den Schritten:
Empfangen (S1) von Sensordaten von mehreren Sensoren (1-i);
Detektieren (S2) eines Fehlers in einem ersten Sensor (F) der mehreren Sensoren (1-i);
und **gekennzeichnet durch** die Schritte
Ermitteln (S3) einer Liste von Sensorkandidaten aus den mehreren Sensoren (1-i);
Bestimmen (S4) eines Ähnlichkeitswerts für jeden Sensor in der Liste der Sensorkandidaten, und
Berechnen (S5) virtueller Sensordaten, welche die Sensordaten des ersten Sensors (F) ersetzen, wobei die virtuellen Sensordaten unter Verwendung der Sensordaten des Sensors mit dem größten Ähnlichkeitswert berechnet werden.

9. Verfahren nach Anspruch 8, wobei das Bestimmen (S4) der Ähnlichkeitswerte eine Berechnung einer Korrelation zwischen Sensordaten des ersten Sensors (F) und Sensordaten der Sensorkandidaten umfasst.

10. Verfahren nach Anspruch 8 oder 9, wobei das Ermitteln (S3) der Liste von Sensorkandidaten vor dem Detektieren eines Fehlers in dem ersten Sensor (F) ausgeführt wird.

11. Verfahren nach einem der Ansprüche 8 bis 10, wobei jedem Sensor in der Liste der Sensorkandidaten ein Gütewert zugeordnet ist, und wobei ein Zuverlässigkeitswert für die virtuellen Sensordaten unter Verwendung der Gütewerte berechnet wird.

12. Verfahren nach einem der Ansprüche 8 bis 11, wobei das Verfahren ferner einen Schritt zum Speichern der empfangenen Sensordaten der mehreren Sensoren (1-i) umfasst, und wobei das Bestimmen (S4) des Ähnlichkeitswerts unter Verwendung der gespeicherten Sensordaten erfolgt, welche vor dem Detektieren eines Fehlers in dem ersten Sensor (F) empfangen worden sind.

13. Verfahren nach Anspruch 12, wobei das Bestimmen (S4) des Ähnlichkeitswerts unter Verwendung von gespeicherten Sensordaten innerhalb eines vorbestimmten Zeitfensters erfolgt.

## Claims

1. Monitoring apparatus (2), comprising:
a receiving device (21) designed to receive sensor data from a plurality of sensors (1-i); and
an evaluation device (22) designed to detect a fault in a first sensor (F) of the plurality of sensors (1-i), and to calculate virtual sensor data that replace the sensor data of the faulty first sensor (F),
**characterized in that**
the evaluation device (22), for the calculation of the virtual sensor data, ascertains a list of sensor candidates from the plurality of sensors (1-i), determines a respective similarity value for the sensor candidates and calculates the virtual sensor data for the faulty first sensor (F) using the sensor data of the sensor having the highest similarity value.

2. Monitoring apparatus (2) according to Claim 1, wherein the evaluation device (22) is designed to store the received sensor data from the plurality of sensors (1-i), and wherein the evaluation device (22) calculates the similarity values using stored sensor data which were stored before the detection of a fault in the first sensor (F).

3. Monitoring apparatus (2) according to Claim 1 or 2, wherein the monitoring apparatus (2) comprises a database (23) designed to provide information about the plurality of sensors (1-i), and wherein the evaluation device (22) is designed to create the list for the sensor candidates using the information about the plurality of sensors (1-i) that is provided in the database (23) .

4. Monitoring apparatus (2) according to any of Claims 1 to 3, wherein the evaluation device (22) is designed to ascertain the sensor candidates using spatial or functional relationships of the individual sensors (1-i).

5. Monitoring apparatus (2) according to any of Claims 1 to 4, wherein the evaluation device (22) is designed to create a computation specification for calculating the virtual sensor data from the sensor data of the sensor (1-i) having the highest similarity value.

6. Monitoring apparatus (2) according to any of Claims 1 to 5, wherein calculating the virtual sensor data comprises calculating a reliability value for the calculated virtual sensor data.

7. Apparatus for monitoring a system (10), comprising:
a plurality of sensors (1-i) designed in each case to provide sensor data corresponding in each case to a detected measurement value;
a monitoring apparatus (2) according to any of Claims 1 to 6, and
a control device (3) designed to control the system (10) using the received sensor data and the calculated virtual sensor data.

8. Method for monitoring a system (10), comprising the following steps:
receiving (S1) sensor data from a plurality of sensors (1-i);
detecting (S2) a fault in a first sensor (F) of the plurality of sensors (1-i);
and **characterized by** the following steps
ascertaining (S3) a list of sensor candidates from the plurality of sensors (1-i);
determining (S4) a similarity value for each sensor in the list of sensor candidates, and
calculating (S5) virtual sensor data that replace the sensor data of the first sensor (F), wherein the virtual sensor data are calculated using the sensor data of the sensor having the highest similarity value.

9. Method according to Claim 8, wherein determining (S4) the similarity values comprises a calculation of a correlation between sensor data of the first sensor (F) and sensor data of the sensor candidates.

10. Method according to Claim 8 or 9, wherein ascertaining (S3) the list of sensor candidates is carried out before detecting a fault in the first sensor (F).

11. Method according to any of Claims 8 to 10, wherein a quality value is assigned to each sensor in the list of sensor candidates, and wherein a reliability value is calculated for the virtual sensor data using the quality values.

12. Method according to any of Claims 8 to 11, wherein the method furthermore comprises a step for storing the received sensor data of the plurality of sensors (1-i), and wherein determining (S4) the similarity value is carried out using the stored sensor data which were received before detecting a fault in the first sensor (F).

13. Method according to Claim 12, wherein determining (S4) the similarity value is carried out using stored sensor data within a predetermined time window.

## Revendications

1. Dispositif de surveillance (2) comportant :
un dispositif de réception (21) qui est conçu pour recevoir des données de capteur de plusieurs capteurs (1-i) et
un dispositif d'évaluation (22) qui est conçu pour détecter une erreur dans un premier capteur (F) des plusieurs capteurs (1-i) et pour calculer des données de capteur virtuelles qui remplacent les données de capteur du premier capteur défectueux (F),
**caractérisé en ce que**
le dispositif d'évaluation (22) pour le calcul des données de capteur virtuelles détermine une liste de capteurs candidats parmi les plusieurs capteurs (1-i), détermine, pour les capteurs candidats, respectivement une valeur de similitude, et calcule les données de capteur virtuelles pour le premier capteur défectueux (F) en utilisant les données de capteur du capteur ayant la plus grande valeur de similitude.

2. Dispositif de surveillance (2) selon la revendication 1, le dispositif d'évaluation (22) étant conçu pour sauvegarder les données de capteur des plusieurs capteurs (1-i) reçues et le dispositif d'évaluation (22) calculant les valeurs de similitude en utilisant des données de capteur sauvegardées qui ont été sauvegardées avant la détection d'une erreur dans le premier capteur (F).

3. Dispositif de surveillance (2) selon la revendication 1 ou 2, le dispositif de surveillance (2) comprenant une base de données (23) qui est conçue pour fournir des informations sur les plusieurs capteurs (1-i) et le dispositif d'évaluation (22) étant conçu pour établir la liste pour les capteurs candidats en utilisant les informations sur les plusieurs capteurs (1-i) fournies dans la base de données (23).

4. Dispositif de surveillance (2) selon l'une des revendications 1 à 3, le dispositif d'évaluation (22) étant conçu pour déterminer les capteurs candidats en utilisant des relations spatiales ou fonctionnelles des capteurs individuels (1-i) .

5. Dispositif de surveillance (2) selon l'une des revendications 1 à 4, le dispositif d'évaluation (22) étant conçu pour établir une règle de calcul pour le calcul des données de capteur virtuelles à partir des données de capteur du capteur (1-i) ayant la plus grande valeur de similitude.

6. Dispositif de surveillance (2) selon l'une des revendications 1 à 5, le calcul des données de capteur virtuelles comprenant le calcul d'une valeur de fiabilité pour les données de capteur virtuelles calculées.

7. Dispositif de surveillance d'un système (10), comprenant :
plusieurs capteurs (1-i) qui sont respectivement conçus pour fournir des données de capteur qui correspondent respectivement à une valeur de mesure captée ;
un dispositif de surveillance (2) selon l'une des revendications 1 à 6 et
un dispositif de commande (3) qui est conçu pour commander le système (10) en utilisant les données de capteur reçues et les données de capteur virtuelles calculées.

8. Procédé de surveillance d'un système (10), comportant les étapes suivantes :
réception (S1) de données de capteur de plusieurs capteurs (1-i) ;
détection (S2) d'une erreur dans un premier capteur (F) des plusieurs capteurs (1-i) ;
et **caractérisé par** les étapes suivantes :
détermination (S3) d'une liste de capteurs candidats parmi les plusieurs capteurs (1-i) ;
détermination (S4) d'une valeur de similitude pour chaque capteur dans la liste des capteurs candidats et
calcul (S5) de données de capteur virtuelles qui remplacent les données de capteur du premier capteur (F), les données de capteur virtuelles étant calculées en utilisant les données de capteur du capteur ayant la plus grande valeur de similitude.

9. Procédé selon la revendication 8, la détermination (S4) des valeurs de similitude comprenant un calcul d'une corrélation entre des données de capteur du premier capteur (F) et des données de capteur des capteurs candidats.

10. Procédé selon la revendication 8 ou 9, la détermination (S3) de la liste de capteurs candidats étant exécutée avant la détection d'une erreur dans le premier capteur (F).

11. Procédé selon l'une des revendications 8 à 10, une valeur de qualité étant associée à chaque capteur dans la liste des capteurs candidats et une valeur de fiabilité pour les données de capteur virtuelles étant calculée en utilisant les valeurs de qualité.

12. Procédé selon l'une des revendications 8 à 11, le procédé comprenant en outre une étape de sauvegarde des données de capteur des plusieurs capteurs (1-i) reçues et la détermination (S4) de la valeur de similitude ayant lieu en utilisant les données de capteur sauvegardées qui ont été reçues avant la détection d'une erreur dans le premier capteur (F) .

13. Procédé selon la revendication 12, la détermination (S4) de la valeur de similitude ayant lieu en utilisant des données de capteur sauvegardées dans une fenêtre de temps prédéfinie.
